# EUROPEAN PATENT APPLICATION

(11) **EP 1 833 021 A1**
(43) Date of publication of application: **12.09.2007**
(21) Application number: 07250958.1
(22) Date of filing: 07.03.2007
(51) Int. Cl.: G06T 7/00

(54) **Digital medical image processing**

(30) Priority: 09.03.2006 GB 0604852
(71) Applicant: Medicsight PLC, London W14 8UD (GB)
(72) Inventor: Beddoe, Gareth Richard c/o Medicsight PLC, London W14 8UD (GB)
(74) Representative: Cross, James Peter Archibald

(57) **Abstract**

In a method of performing CAD analysis of a medical image, the medical image volume 304 is processed in a pre-processing module 306 to generate intermediate data 308, and the intermediate data is processed by a filtering module 310 to generate CAD result data for display on a viewer workstation 312. The different modules may be executed by different processing nodes or devices, enabling a variety of different system architectures.

## Description

### Field of the Invention

The present invention relates to computer implemented medical image processing.

### Background of the Invention

Medical images are a valuable tool for diagnosis, and a variety of techniques or modalities have been developed; these include X-ray, computed tomography (CT), ultrasound, and magnetic resonance imaging (MRI). Conventionally, these images have been inspected visually by trained radiographers. The images may be generated digitally (CT and MRI) or digitized from an analog image (X-ray). The digitized images may be inspected and annotated by radiographers, and the annotations stored for later retrieval and analysis.

The task of the radiographer can be made easier by storing the medical image on a computer providing a user interface which allows the user to manipulate the image and to visualize the structures contained therein in different ways. However, the process is time consuming and must be performed with great care in case any abnormalities are missed.

To replace some or all of the work of the radiologist, Computer Assisted Detection (CAD) software has been designed to analyze the medical image and detect potential abnormalities. The detection can be performed semi-automatically, with some interaction with the radiologist, or automatically, involving no interaction beyond the selection of the image to be analyzed. For example, the applicant's MedicHeart^{™}, MedicLung^{™} and MedicColon^{™} diagnostic software perform semiautomatic diagnosis of CT scans of the heart, lung and colon respectively.

CAD software uses one or more algorithms to analyze a given medical image. The image may be pre-processed prior to analysis, for example by segmenting the image to flag regions of interest or to remove regions of no interest. Alternatively, the image may be enhanced for display, for example by increasing contrast or removing noise. The image may then be analyzed by CAD software to identify abnormalities, using one or more algorithms appropriate to the subject of the image. Examples of algorithms for performing such processing are described in the applicant's patent publications WO-A-05/114566, WO-A-OS/112769 and WO-A-06/000738. The CAD algorithm may identify and mark the positions and/or extents of a specific type of suspected abnormality in the image. The output of a CAD algorithm is typically displayed using a viewer application, allowing the results of the CAD algorithm to be visualised and manipulated by the user in different ways. For example, the positions of suspected abnormalities may be highlighted in a view of the medical image, or the shape of a suspected abnormality may be displayed with three-dimensional graphics.

Standard formats and protocols exist for the storage and communication of medical images, medical image metadata, and the results of CAD analysis. One such standard is the Digital Imaging and Communications in Medicine (DICOM) standard, published by the National Electrical Manufacturers' Association (NEMA). Details of the DICOM standard were available on 15^{th} February 2006 at http://medical.nema.org/. The DICOM format includes Information Object Definitions (IODs) for communicating CAD results, including Secondary Capture Image (SCI) IODs.

Patent publication US-A-25169508 describes a system for indicating whether a medical image has been pre-processed for image enhancement. If the image has been pre-processed, it is corrected prior to CAD analysis; in other words, the pre-processing is reversed.

Patent publication no. US-A-6909795 describes a system in which CAD results are integrated in the pixels of a DICOM secondary image so that they are available at a viewing workstation.

The programme of the DICOM 2005 conference in Budapest, Hungary, September 26-28 2005, available on 15^{th} February 2006 at:
medica1.nema.org/Dicom/DCW -2005/PROGRAM - DICOM -2005 - International- Conference.doc included an abstract for a presentation entitled 'Issues Regarding Functional MRI Imaging Workflow and DICOM', in which the authors report that 'very few of the researchers and clinicians involved with functional MRI utilize DICOM formats for their intermediate results or final images. DICOM is merely used as a means to get the base data out of the scanners, which the researchers and clinicians routinely convert to one of several competing, non-DICOM formats for subsequent processing'.

### Statement of the Invention

According to one aspect of the invention, there is provided a method of performing CAD analysis of a medical image, wherein the medical image is processed in a first stage to generate intermediate result data, and the intermediate result data is processed at a second stage to generate CAD result data. The CAD analysis may involve more than two distinct stages, with each subsequent stage taking as input the intermediate result data of the previous stage. Different stages may be performed at different times, by different processing nodes or devices, and/or with different priorities. Each stage may further require one or more user-defined input parameters.

An advantage of embodiments of the invention is that they allow distributed CAD analysis; for example, processing-intensive earlier stages may be performed by medical image servers, and the results communicated to viewer workstations so that the final CAD results may be customized without requiring excessive processing power. Conversely, the earlier stages may be performed at an image capture location, and the intermediate data communicated to a CAD server for generating the CAD results without requiring the original medical image to be sent over a bandwidth-limited communications link.

Where the medical image is stored in a DICOM format, the intermediate data may be stored as one or more Information Object Definitions (IODs) and preferably Secondary Capture Image (SCI) IODs. This ensures compatibility with the DICOM format without interfering with other uses of the format.

### Brief Description of the Drawings

Specific embodiments of the present invention will now be illustrated with reference to the accompanying drawings, as described below.
Figure 1 is a schematic diagram showing a medical imaging device and a remote computer for processing image data from the medical imaging device.
Figure 2 is a more detailed diagram of the remote computer.
Figure 3 is a schematic diagram of a CAD processing method in an embodiment of the invention.
Figure 4 is a diagram of a server-workstation architecture in an embodiment of the invention.
Figure 5 is a diagram of a peer-to-peer architecture in another embodiment of the invention.

### Detailed Description of the Embodiments

### Medical Imaging

The present invention is applicable to digital medical images. One example of such an image is a CT scan image. A CT scan image is a digital image comprising one or a series of CT image slices obtained from a CT scan of an area of a human or animal patient. Each slice is a 2-dimensional digital grey-scale image of the x-ray absorption of the scanned area. The properties of the slice depend on the CT scanner used; for example, a high-resolution multi-slice CT scanner may produce images with a resolution of 0.5-0.6 mm/pixel in the x and y directions (i.e. in the plane of the slice). Each pixel may have 32-bit greyscale resolution. The intensity value of each pixel is normally expressed in Hounsfield units (HU). Sequential slices may be separated by a constant distance along the z direction (i.e. the scan separation axis); for example, by a distance of between 0.75-2.5 mm. Hence, the scan image may be a three-dimensional (3D) greyscale image, with an overall size depending on the area and number of slices scanned. Alternatively, the scan image may comprise a single slice and therefore be a single two-dimensional (2D) greyscale image.

The CT scan may be obtained by any CT scanning technique, such as electron beam computed tomography (EBCT), multi-detector or spiral scan or any technique which produces as output a 2D or 3D image representing X-ray absorption.

The invention is not limited to CT scan images, but may be applied to other digital medical images, such as MRI, ultrasound or X-ray images. Conventional X-ray images may be developed on an X-ray film prior to being digitized.

### Computer System

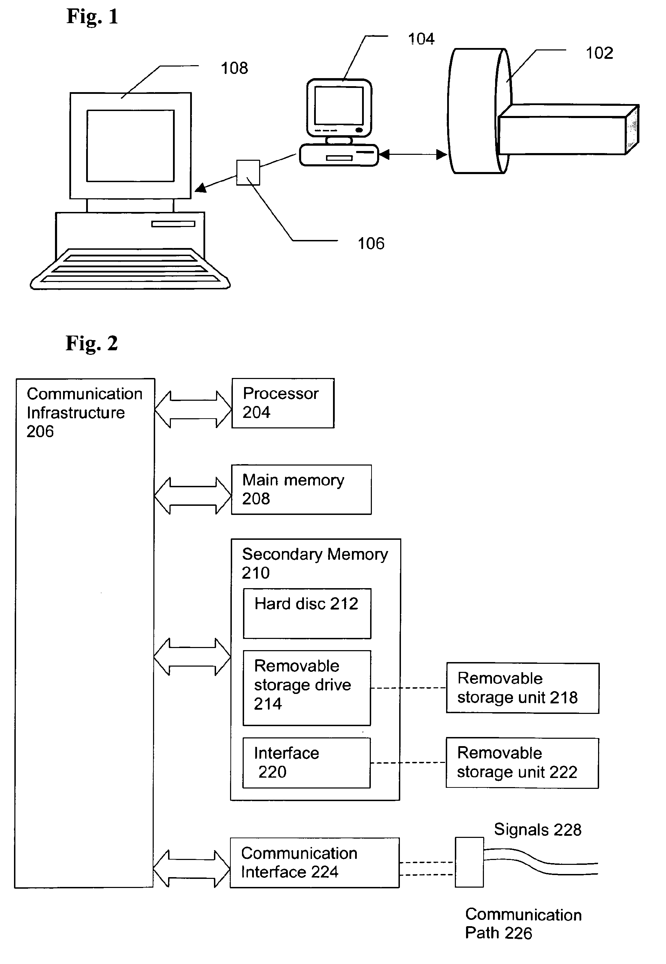

As shown in Figure 1, the scan image may be created by a computer 104, which receives scan data from a scanner 102 and constructs the scan image. The scan image is saved as an electronic file or a series of files, which are stored on a storage medium 106, such as a fixed or removable disc. The scan image includes metadata associated with the scan image. The scan image may be analyzed by the computer 104, or the scan image may be transferred to another computer 108 which runs software for analyzing the scan image and/or displaying the results of the analysis, as described below. The software may be stored on a carrier, such as a removable disc or a solid-state memory, or downloaded over a network.

The computers described herein may be computer systems 200 as shown in Figure 2. Embodiments of the present invention may be implemented as programmable code for execution by the computer system 200. Various embodiments of the invention are described in terms of this example computer system 200. After reading this description, it will become apparent to a person skilled in the art how to implement the invention using other computer systems and/or computer architectures.

Computer system 200 includes one or more processors, such as processor 204. Processor 204 may be any type of processor, including but not limited to a special purpose or a general-purpose digital signal processor. Processor 204 is connected to a communication infrastructure 206 (for example, a bus or network). Various software implementations are described in terms of this exemplary computer system. After reading this description, it will become apparent to a person skilled in the art how to implement the invention using other computer systems and/or computer architectures.

Computer system 200 also includes a main memory 208, preferably random access memory (RAM), and may also include a secondary memory 210. Secondary memory 210 may include, for example, a hard disk drive 212 and/or a removable storage drive 214, representing a floppy disk drive, a magnetic tape drive, an optical disk drive, etc. Removable storage drive 214 reads from and/or writes to a removable storage unit 218 in a well-known manner. Removable storage unit 218 represents a floppy disk, magnetic tape, optical disk, etc., which is read by and written to by removable storage drive 214. As will be appreciated, removable storage unit 218 includes a computer usable storage medium having stored therein computer software and/or data.

In alternative implementations, secondary memory 210 may include other similar means for allowing computer programs or other instructions to be loaded into computer system 200. Such means may include, for example, a removable storage unit 222 and an interface 220. Examples of such means may include a program cartridge and cartridge interface (such as that found in video game devices), a removable memory chip (such as an EPROM, or PROM) and associated socket, and other removable storage units 222 and interfaces 220 which allow software and data to be transferred from removable storage unit 222 to computer system 200.

Computer system 200 may also include a communication interface 224. Communication interface 224 allows software and data to be transferred between computer system 200 and external devices. Examples of communication interface 224 may include a modem, a network interface (such as an Ethernet card), a communication port, a Personal Computer Memory Card International Association (PCMCIA) slot and card, etc. Software and data transferred via communication interface 224 are in the form of signals 228, which may be electronic, electromagnetic, optical, or other signals capable of being received by communication interface 224. These signals 228 are provided to communication interface 224 via a communication path 226. Communication path 226 carries signals 228 and may be implemented using wire or cable, fibre optics, a phone line, a cellular phone link, a radio frequency link, or any other suitable communication channel. For instance, communication path 226 may be implemented using a combination of channels.

In this document, the terms "computer program medium" and "computer usable medium" are used generally to refer to media such as removable storage drive 214, a hard disk installed in hard disk drive 212, and signals 228. These computer program products are means for providing software to computer system 200.

Computer programs (also called computer control logic) are stored in main memory 208 and/or secondary memory 210. Computer programs may also be received via communication interface 224. Such computer programs, when executed, enable computer system 200 to implement the present invention as discussed herein. Accordingly, such computer programs represent controllers of computer system 200. Where the invention is implemented using software, the software may be stored in a computer program product and loaded into computer system 200 using removable storage drive 214, hard disk drive 212, or communication interface 224, to provide some examples.

In alternative embodiments, the invention can be implemented as control logic in hardware, firmware, or software or any combination thereof.

### CAD Processing

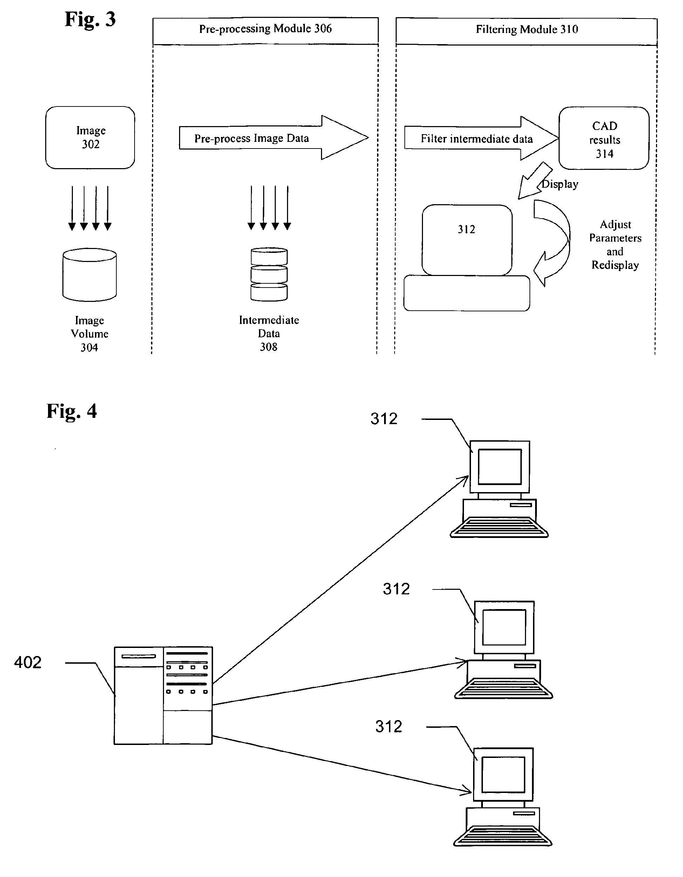

Figure 3 shows schematically a method of CAD processing of a medical image using a DICOM format, in an embodiment of the present invention. A digital medical image 302 is captured and stored together with image metadata in the DICOM format in an image volume 304 - this may take place in the computer 104 or 108 described above.

In a CAD pre-processing module 306, the image volume 304 is pre-processed and the intermediate results of the pre-processing are stored as intermediate data 308. The pre-processing preferably comprises various CAD processing components that are resource-hungry and/or do not require data other than the image volume 304.

The intermediate data are stored as DICOM SCI IODs as defined in the DICOM standard PS-3.3 (2004). The use of this format facilitates the communication of the intermediate data between DICOM conformant systems, preferably without interfering with the storage of final CAD results. To comply with the DICOM standards, an SCI IOD must contain some image data. However, the intermediate data need not include an image derived from the original image 302. Instead, the intermediate data 308 may include a dummy image or an image containing some information not derived from the original image 302, such as a product logo.

In a CAD filtering module 310, the intermediate data are processed to generate CAD filtering results, which are preferably displayed to an end user on a viewer workstation 312. The end user may provide parameter values for the CAD filtering module, which are used to generate the CAD filtering results 314. The user may modify the parameter values and re-run the CAD filtering module on the intermediate data using the new parameter values to generate a modified set of CAD filtering results 314. In this way, the filtering module 310 may be interactive, while the pre-processing module 306 may not be interactive and may be run as a batch or background process. The filtering module 310 may be run repeatedly with different input parameters on the same set of intermediate data 308 without having to reload and/or re-process the original image volume 304 to generate the intermediate data. As a result, the time taken to re-run a CAD process with different input parameters is significantly reduced.

The exact nature of the CAD filtering results 314 may depend on the particular CAD application. The types of data of the CAD filtering results 314 may include coordinates of suspected abnormal regions (e.g. colonic polyps or pulmonary nodules), contours representing the outlines of these regions or other anatomical features, and feature information relating to measurements, degrees of confidence and/or classifications of the detected regions. The CAD filtering results 314 may be stored as DICOM IODs, and communicated to another DICOM-compatible process if required.

The CAD pre-processing module 306 and filtering module 310 are preferably implemented as discrete programming libraries having defined application program interfaces (API) that allow the modules to be incorporated in CAD processing systems.

### System Architectures

The CAD pre-processing module 306 and the CAD filtering module 310 are distributable, allowing adoption of a variety of different system architectures. In one embodiment, both modules 306, 310 are executed sequentially for each image volume 304 on the same viewer workstation 312 in a sequential fashion. The pre-processing module 306 may be activated manually by the user, or automatically based on metadata stored with the original image 302. The pre-processing module 306 may require no input from the end user, and may therefore be run as a background service that automatically pre-processes image volumes 304 as they arrive at the workstation 312. The filtering module 310 may be activated by the end user as required, and used to perform filtering based on the pre-processed intermediate data 308.

In an alternative embodiment, as shown in Figure 4, the pre-processing module 306 is run on a pre-processing server 402 that receives captured medical image volumes 304 from computer(s) 104 and pre-processes the volumes 304 to generate corresponding sets of intermediate data 308 which are then distributed over the Internet or an intranet to one or more viewer workstations 312, each running the filtering module 310 as described above. This arrangement removes the pre-processing burden from the viewer workstations 312. Where a plurality of the viewer workstations 312 are to perform CAD on the same image, this architecture also reduces the need for a plurality of the viewer workstations 312 to pre-process the same image volume 304.

The architecture of Figure 4 also enables a licensing model in which the pre-processing module 306 generates the intermediate data 308 in an encrypted form. The intermediate data may only be decrypted by licensed filtering modules 310, so that end users are required to obtain a licence and receive a current decryption key in order to filter the intermediate data 308. In this way, payment may be obtained from the end users for use of the intermediate data 308, thereby funding operation of the pre-processing server 402.

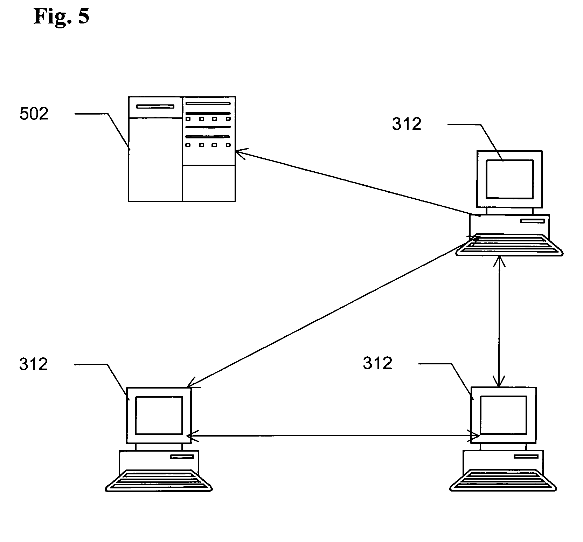

In an alternative embodiment, as shown in Figure 5, a plurality of viewer workstations 312 are interconnected in a peer-to-peer network, over an intranet or the Internet. Each viewer workstation 312 runs both the pre-processing module 306 and the filtering module 310. The intermediate data 308 from the pre-processing module 306 on one of the viewer workstations 312 may be distributed over the network to other ones of the viewer workstations 312 for filtering by their respective filtering modules 310. The intermediate data may also be transmitted to an intermediate data server 502 for storage and distribution, for example over a network as described with reference to Figure 4.

In the embodiment of Figure 5, the intermediate data may be output in an encrypted format so that each filtering module 310 requires a decryption key provided under licence, as in the embodiment of Figure 4.

Various other architectures are enabled within the scope of the present invention. For example, the computer(s) 104 on which the image volumes 304 are captured may run the pre-processing module 306 and distribute the intermediate data to an intermediate data server for onward distribution to viewer workstations 312 each running the filtering module 310. This arrangement avoids the need to transmit the image volumes over a network; instead, just the intermediate data may be transmitted.

### Alternative Embodiments

The embodiments described above are illustrative of rather than limiting to the present invention. Alternative embodiments apparent on reading the above description may nevertheless fall within the scope of the invention.

## Claims

1. A method of performing computer-aided detection (CAD) of abnormalities in a medical image, comprising:
**a**. performing a pre-processing stage (306) on the medical image (302; 304) to generate intermediate data (308); and
**b**. performing a filtering stage on the intermediate data (308) to generate CAD result data;
wherein steps **a** and **b** are performed discretely.

2. The method of claim **1**, wherein steps **a** and **b** are performed on discrete devices or processing nodes (312, 402, 502).

3. The method of claim **1** or **2**, wherein step **a** is performed substantially without user interaction.

4. The method of claim **3**, wherein step **a** is performed as a background process.

5. The method of any preceding claim, wherein step **b** is performed as an interactive process.

6. The method of any preceding claim, wherein step **b** is performed using one or more parameters input by a user, independent of the intermediate data (308).

7. The method of claim **6**, wherein step **b** is repeated following modification of said one or more parameters by the user.

8. The method of any preceding claim, wherein step **b** is performed on a viewer workstation (312), the method further comprising displaying said CAD result data on the viewer workstation.

9. The method of any preceding claim, wherein step **a** is performed on a server (402) and step **b** is performed on a workstation (312).

10. The method of any one of claims **1** to **9**, wherein steps **a** and **b** are performed at discrete nodes (312) of a peer-to-peer network.

11. The method of any preceding claim, wherein step **a** is performed by a medical imaging station (104).

12. The method of any preceding claim, wherein the intermediate data (308) is encrypted at step **a** and decrypted at step **b**.

13. The method of any preceding claim, wherein the intermediate data (308) is stored in a DICOM format.

14. The method of claim **13**, wherein the intermediate data (308) is stored as an IOD.

15. The method of claim **14**, wherein the IOD is an SCI IOD.

16. A computer program arranged to perform the method of any preceding claim when executed on a suitably arranged computer (200).

17. A computer program product comprising the computer program of claim **16**, recorded on a medium.

18. Apparatus arranged to perform the method of any one of claims **1** to **15**.

19. A network system for performing computer-aided detection (CAD) of abnormalities in a medical image, comprising:
**a**. a first network node (104, 312, 402) arranged to perform a pre-processing stage on the medical image to generate intermediate data; and
**b**. a second network node (312) arranged to perform a filtering stage on the intermediate data to generate CAD result data.

20. A data structure comprising intermediate CAD processing results stored in a DICOM SCI IOD format.
